# EUROPEAN PATENT SPECIFICATION

(11) **EP 0 788 320 B1**
(45) Date of publication and mention of the grant of the patent: **11.05.2005**
(21) Application number: 93919543.4
(22) Date of filing: 23.08.1993
(51) Int. Cl.: A23L 3/40, F24J 2/04

(54) **DEVICE UTILIZING SOLAR ENERGY, ESPECIALLY FOR DRYING AND ROASTING OF AGRICULTURAL-, AS WELL AS FOOD PROCESSING PRODUCTS, FINALIZING DISTILLATION AND EVAPORATION, SEPARATING OF COMPLICATED COMPOUNDS**
SONNENENERGIE BENUTZENDE VORRICHTUNG, INSBESONDERE ZUM TROCKNEN UND RÖSTEN VON LANDWIRTSCHAFTLICHEN ERZEUGNISSEN UND LEBENSMITTELPRODUKTEN, ZUR DESTILLATION, VERDAMPFUNG, SOWIE ZUR TRENNUNG KOMPLEX ZUSAMMENGESETZTER MATERIALIEN
DISPOSITIF UTILISANT L'ENERGIE SOLAIRE, NOTAMMENT POUR FAIRE SECHER OU GRILLER DES PRODUITS AGRICOLES ET DE L'INDUSTRIE ALIMENTAIRE, FINALISER LA DISTILLATION ET L'EVAPORATION, SEPARER DES COMPOSES COMPLEXES

(43) Date of publication of application: 13.08.1997
(73) Proprietor: GÖDE, Gábor, 1126 Budapest (HU)
(72) Inventor: GÖDE, Gábor, 1126 Budapest (HU)
(74) Representative: Farago, Peter Andreas, Dipl.-Ing.
(86) International application number: PCT/HU1993/000046
(87) International publication number: WO 1995/005754

(56) References cited:
- US-A- 4 285 143
- US-A- 4 559 926
- US-A- 4 995 377
- PATENT ABSTRACTS OF JAPAN, Vol. 10, Nr. 303, (16 October 1986), C-378; JP,A,61 115 439 (TAKUO AZUMA).

## Description

Subject of the invention is a device utilizing solar energy, especially for drying and roasting of agricultural-, as well as food processing products, finalising distillation and evaporation, separating of complicated compounds. Device according to the invention consists of collectors adjustable to the direction of the radiation of the sun and a system transforming the heat energy accumulated by the collectors to a device utilizing the receipted heat energy.

Utilisation of the solar energy is the most favourable method of generating energy from the point of view of the environment protection. Opportunities hidden in the solar energy had been recognised in the ancient time but its utilisation on appropriate level with proper efficiency especially as industrial utilization was managed recently. Explanation for this is that density of the sun's radiating energy is on relatively low level and it is scattered and depends heavily on the geographical location, season of the year, period of the day and angle of incidence of the sunbeam. Because of this the full scale of radiated energy is available between the two figures of 10 some times Watts per square meters and one kilo Watt per square meters density respectively intensity. Incidentality and periodicity of the solar energy current as well as the small intensity is the limit of the utilization for the scattered energy.

Mostly solar energy utilization on industrial scale is made with applying the so called plane plate collectors without concentrating.

Circulation in water getting warm having been filled in the plane plate collectors constructed as fix, plane receipting screens containing pipe system is generated because they are radiated by direct sunbeam where the warmed water transforms its heat energy in heat exchanger and freon being vaporized there generates electrical current in a turbo generator. /Pumped water transfers its heat energy to freon in the heat exchanger which is vaporizing. Freon gas on over pressure expands in a turbo generator constructed on special way and freon condenses there later./ A so called Rankine circulation is here where the source of heat is the water heated on temperature 60-90 degree Celsius. Top efficiency of this type of systems is between 5-11%. These plane collectors despite of their low level therm dynamical efficiency are suitable for providing electrical energy for agricultural centres and small scale enterprises.

Importance of devices concentrating solar energy is hidden in the high temperature achievable with the optical concentration of the solar energy. Concentration can be achieved with sun following moving of the gathering collectors. Main types of devices are the paraboloid, cylindrical-paraboloid collectors the spherical mirrors and Presnel type lenses.

Processes and devices mentioned before utilise the solar energy on indirect way. Plane collector type devices contain fixed namely not sun following apparatus presently.

Cylindrical paraboloid or different called trough paraboloid collectors belong to the gathering collectors and their rotation is solved in one way only, and the working liquid current in the pipeline located in the focal point vaporizes than heating up to the right temperature it departures from the collector and in the energy transformation system its energy is transformed and the vapour is condensed in the condensator and the liquid streams back under pressure to the pipe line system located in the focal point of the collector. In the pipe line system located in the collector's focus wit different type system heat transferring substance /i.e liquid natrium/ circulates which transforms its heat energy to the working substance in a heat exchanger.

Implementation of these type of devices requests high level of cost and very sophisticated technical facilities.

US 4 285 143 A relates to an enclosure for drying and storing grains and crops utilizing solar energy, comprising: one side of the enclosure in its entirety, having a structural transparent material, a wall positioned adjacent the inside of said transparent side to form an air duct, an absorbent material positioned in said air duct, and an air intake having means for passing air through said duct and over said absorbent material; a plenum chamber connected to each of the extreme ends of said duct; a planar array of tubing having a multiplicity of air ports therein connected to said plenum, a blower for each of said plenum chambers directing air from said duct to said plenums and from said plenums to said tubing; and means positioning said planar array of tubing over the floor of said enclosure to direct solar heated air upwardly through the corps stowed in said enclosure.

JP 61-115 439 A describes an apparatus for drying fish by solar heat. This apparatus consists of a nearly pyramidal housing having plural lighting faces made of covering material such as vinyl sheet etc. which is placed on a heat-collection plate having a heat-collecting face coated with black paint, to obtain a sealed drying chamber. Plural suction pipes are attached to the bottom of the drying chamber an exhaustion pipe is attached to the top of the chamber, and mesh tables are arranged in multiple stages in the chamber.

In US 4 559 926 A a parabolic-trough solar collector system is disclosed, with each collector driver to track the sun using a ring driven in centerless fashion. The parabolic troughs are made of laminated plywood or plastics or metals. The drive motor moves a flexible belt which is routed about the drive ring on each collector. The motion of the cable moves all drive rings together to track the sun. A photodetector senses the position of the sun and provides the signal needed to drive the collectors in the correct direction.

US 4 559 377 A relates to a solar collector comprising: an elongate main boom having a longitudinal axis; a solar collector frame; first mounting means for pivotally mounting said solar collector frame to said main boom for pivotal motion about a first pivotal axis substantially parallel to the longitudinal axis of said main boom; and first motor means, separate from said first mounting means, mounted to said boom and having a rotary output shaft coaxially aligned with said first pivotal axis and drivingly connected to said frame, for pivoting said frame about said first pivotal axis.

An Object of the invention is to create a device which decreases significantly the disadvantages mentioned previously and which implements the move /solar following/ of plane collectors and cylindrical paraboloid collectors in two directions and utilizes on economical way the heat energy in the heat absorbing system of the collectors.

The above and further objects which will become apparent hereinafter are achieved by a device as defined in claims 1 and 5. Further advantageous features of the invention are set out in the dependent claims.

Further the invention will be described on the base of drawings where letters are used to sign the generalized parts of the invention and numbers are used as identification mark in detailed description.
Figure 1. introduces the device according to the invention as the general outlined structure including the sketch of opportunity for automatic move in the direction of the sun as well.
Figure 2. introduces the device according to the invention as one manufactured form in top-view and in section partly.
Figure 2a. introduces the device according to the invention in side view.
Figures 2b. and 2c. introduce the absorbing plate of the device according to the invention in side-view.
Figures 2d. and 2e. introduce the absorbing plate of the device according to the invention in top-view.
Figure 2f. shows a part of the device on Figre 2a.
Figure 3. introduces the device according to the invention shown on Figure 3. as axonometric view.
Figure 3b. introduces the air filter of the device according to the invention as axonometric view of one manufactured form.
Figure 3c. introduces the coupling part in the air current path of the device according to the invention as axonometric view of one manufactured form.

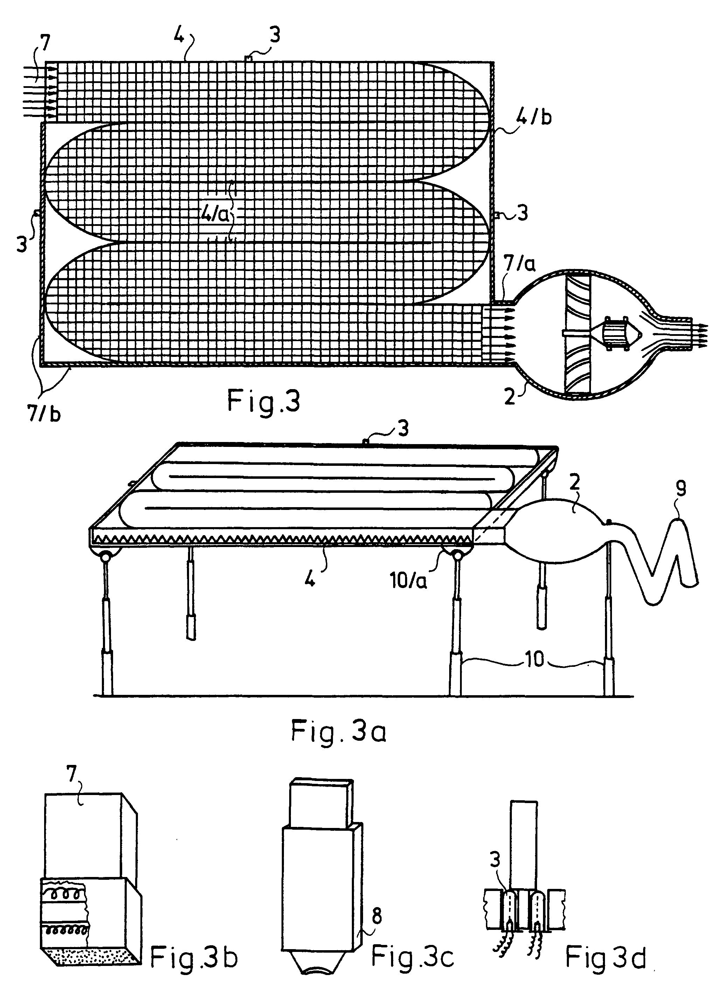

Figure 3.d introduces the light diodes applied in the device according to the invention as one manufactured form.

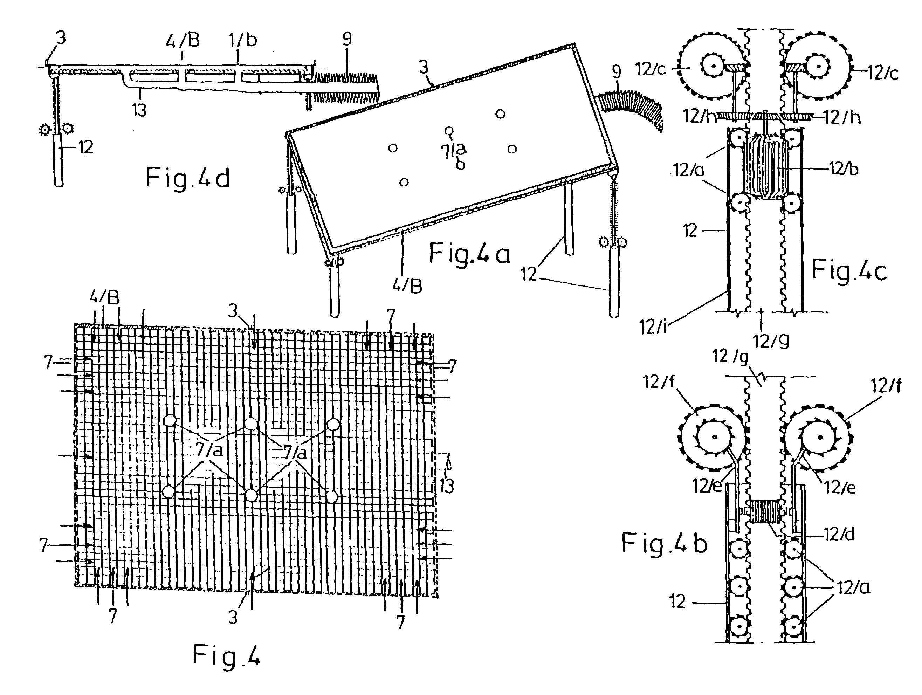

Figure 4. introduces the device according to the invention as further manufactured form on top-view.
Figure 4a. introduces the device according to the invention shown on figure 4. as axonometric view.
Figure 4b. and 4c. introduces the supporting-moving mechanism of the device according to the invention as one and an other one manufactured form in side-view.
Figure 4d. introduces the device according to the invention shown on figure 4. as manufactured form in side-view.

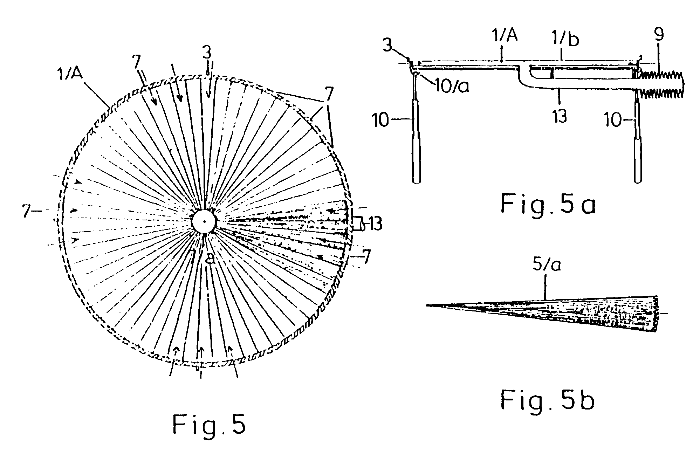

Figure 5. introduces the device according to the invention as further manufactured form on top-view.
Figure 5a. introduces the device according to the invention shown on figure 4. as side-view.
Figure 5b. introduces the absorbing plate of the device according to the invention as top-view.

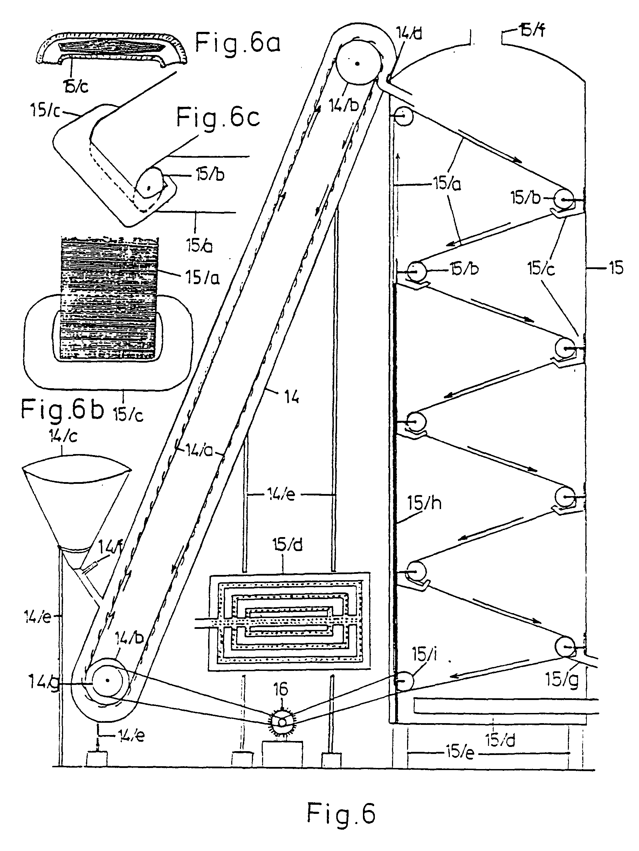

Figure 6. introduces the devices according to the invention as sketch of one manufactured form.
Figure 6a. and Figures 6b. introduce the device according to the invention shown on the figure 6. of its driving over container in section and on top-view.
Figure 6c. introduce the device according to the invention shown on the figure 6. of its driving part's axonometric view.

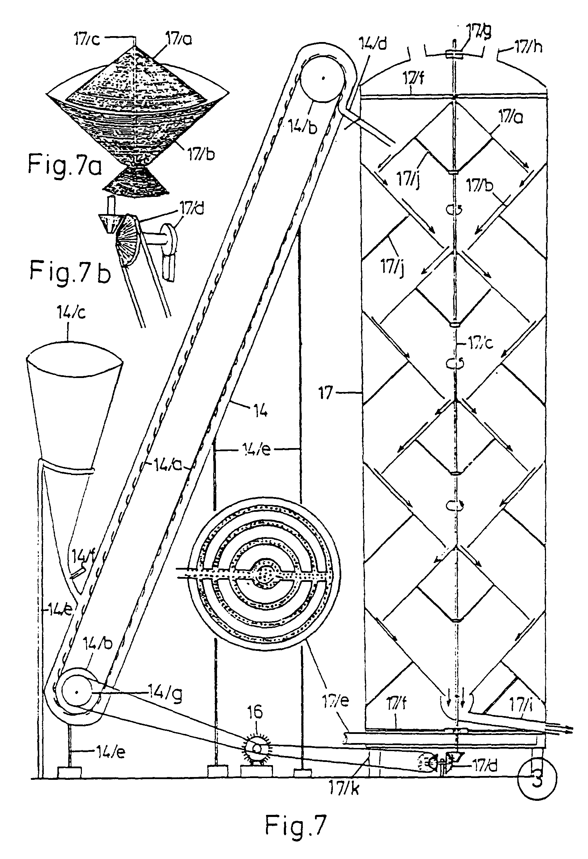

Figure 7. introduces the devices according to the invention as sketch of one further manufactured form.
Figure 7a. introduces the part of the whirler of the device according to the invention shown on figure 7. in axonometric view.
Figure 7b. introduces the drive of the conical wheel of the device according to the invention shown on figure 7. in axonometric view.

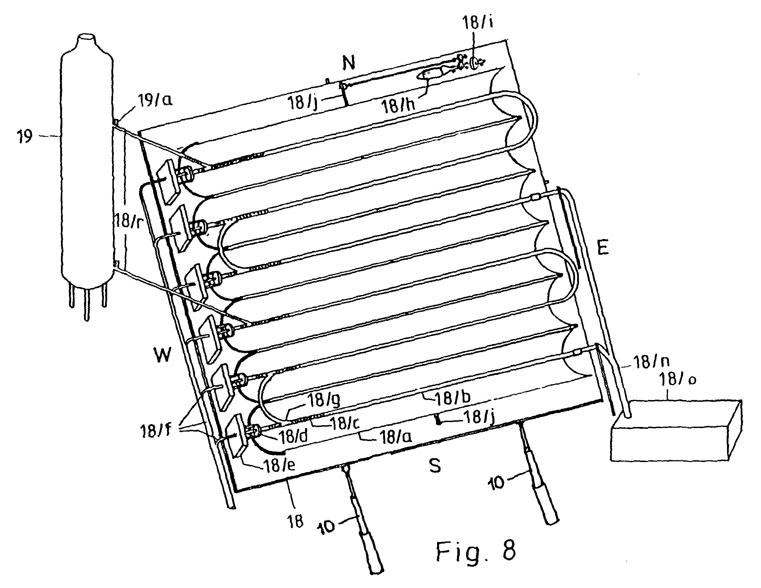

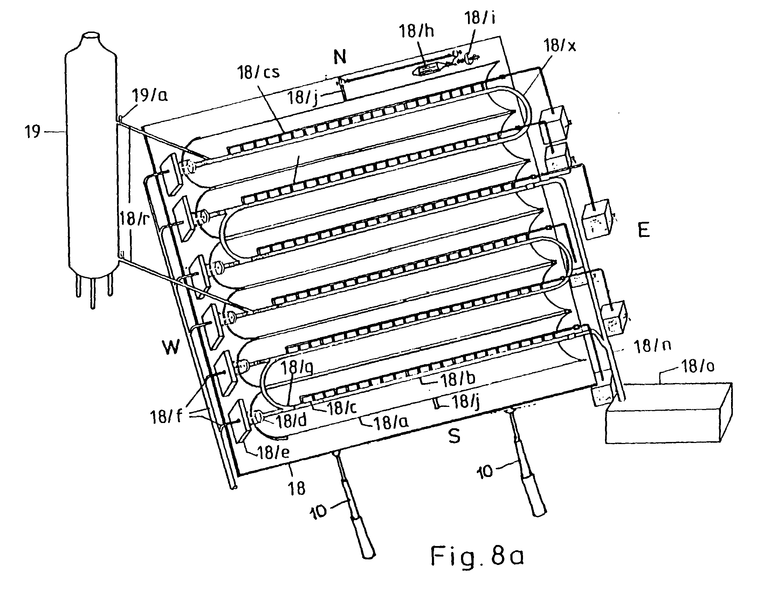

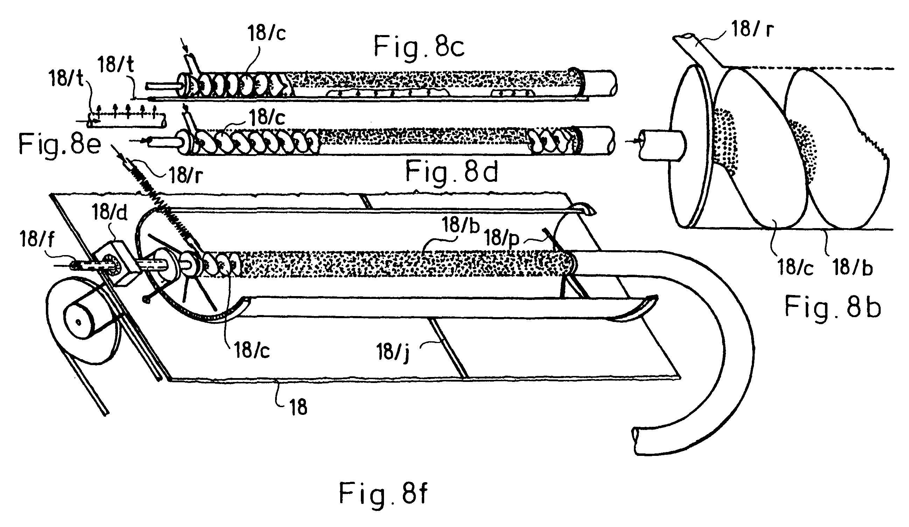

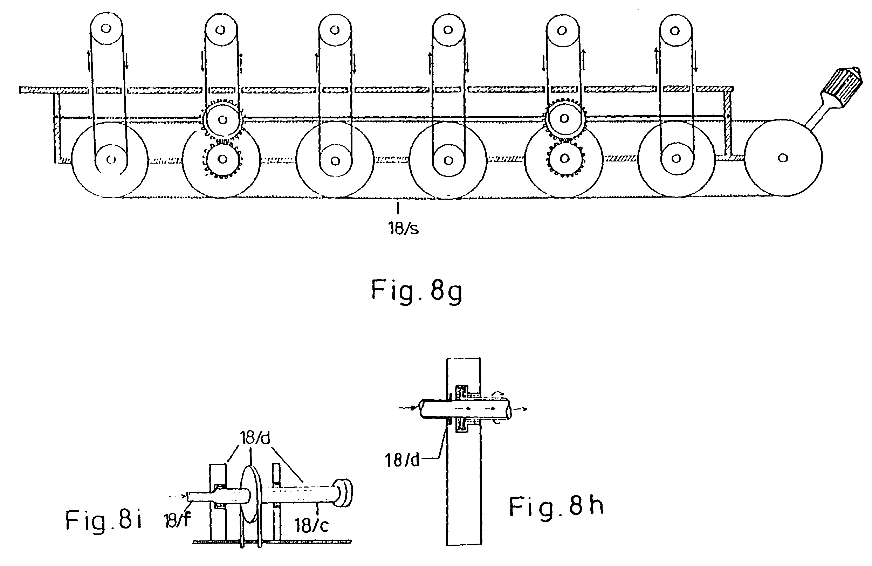

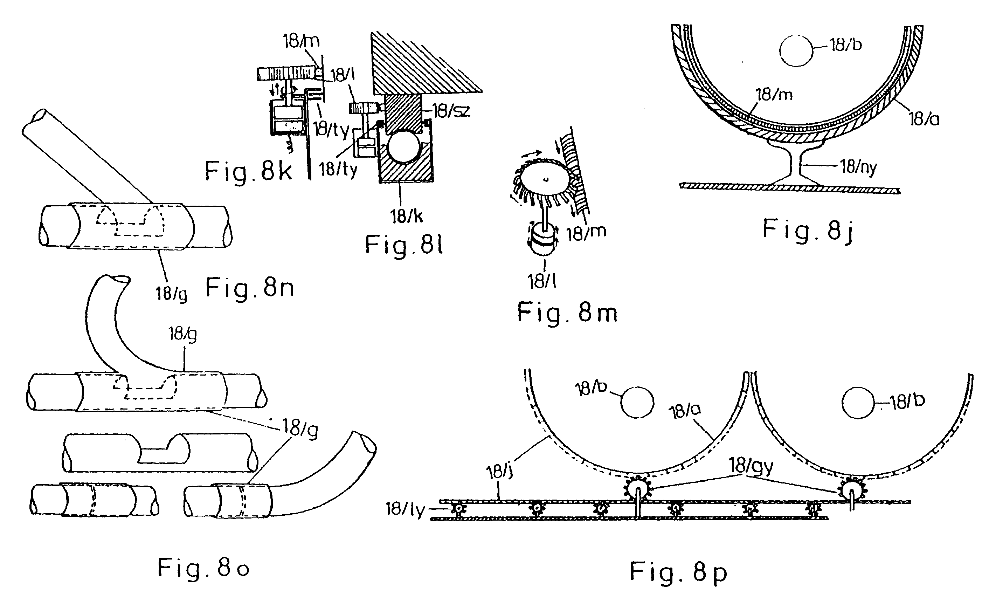

Figure 8. introduces the devices according to the invention as one further manufactured form in sketched axonometric view.
Figure 8a. introduces the devices according to the invention as sketch of one further manufactured form.
Figure 8.b introduces the move mechanism of the device according to the invention shown the sketch of one manufactured form on the figure 8. and figure 8a. in section view.
Figure 8c. and figure 8d. introduce the spiral shaft of the device according to the invention shown on figure 8. as one manufactured form in one-one axonometric view.
Figure 8e. introduce the air inlet pipe of the device according to the invention shown on figure 8. in section view.
Figure 8f. introduces one segment of the device according to the innovation with arcing pipe and with binding element of the absorbing working tube and its drive shown on figure 8. and figure 8a. in sketched axonometric view.
Figure 8g. introduces the mutual driving part of the device according to the invention in manufactured form shown on figure 8a. and figure 8f. in axonometric view.
Figure 8h. and figure 8i introduce the frame with bering for the absorbing working tube of the device according to the invention shown on figure 8. and figure 8a. as manufactured form in sketch.
Figure 8j. introduces the supporting mechanism of the cylindrical paraboloid collector of the device according to the invention shown on Figure 8. and figure 8a. in manufactured form.
Figure 8k. figure 81. and figure 8m introduce the coupling parts of the rotating mechanism of the device according to the invention as sketched manufactured form in view.
Figure 8n. and figure 8o. introduce the pipe coupling element of the device according to the invention shown on figure 8. and figure 8a. as manufactured form in axonometric view.

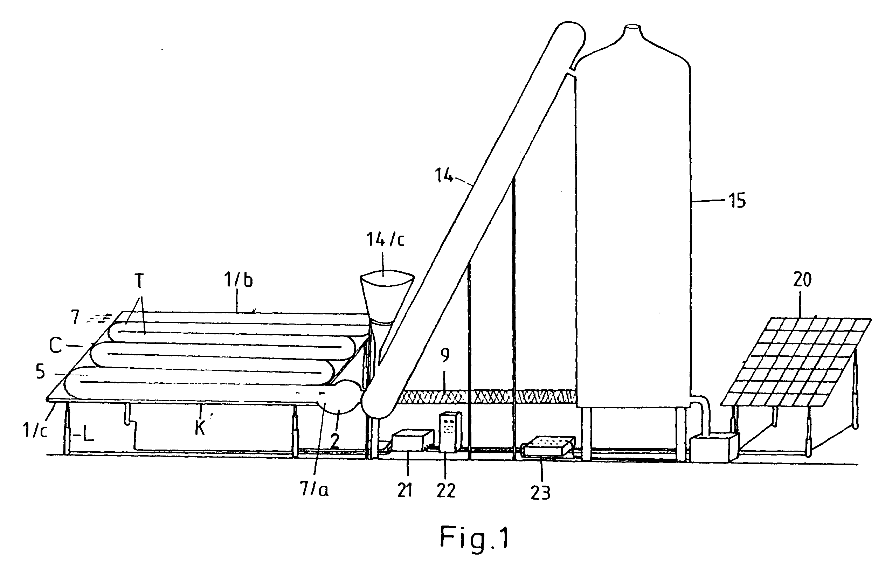

On figure 1. the most general structure of the invention utilizing solar energy is introduced where on the place of deployment a supporting-moving leg-structure L transforming more directions movement is placed which adjustable or controllable with electrical way and its upper part is connected to a frame K. On the base plate of plane collector C placed on frame K an insulating plate lies on which absorbing plate 5 with pyramid or wedge shaped surfaces is among baffles T, and an air current path is made by it together with the latest. Baffles T are placed perpendicular to the base plate, and translucent covering plate 1/b covers all the surface. Inlet 7 having an air filter is on plane collector C which among the baffles T via outlet 7/a including pipe line 9 and air pump 2 is connected making an open air current path to the device 15 utilizing heat energy. The air soaked in this way via the inlet 7 flows among the baffles T and it is warmed up by the absorbing plate 5 warmed by the sunbeam, and via the favourable flexible pipe line 9 connected to the outlet 7/a transported by the air pump 2 it goes to the devices 15 as well as 17 utilizing directly hot air. According to claim the plane collectors with binding element 3.C can be connected together. There is further on figure 1. the drawing of layout of an automatic sun following system where accumulator plantations 23 and control centre 22 are connected to sun plantation unit 20. Hydraulic control centre 21 is connected with pipe lines to the leg-structure L supporting and move the collectors.
Elevator 14 is coupled to device 15 utilizing solar energy which elevator's bottom part is furnished with product holding container 14/c consisting a feeder.

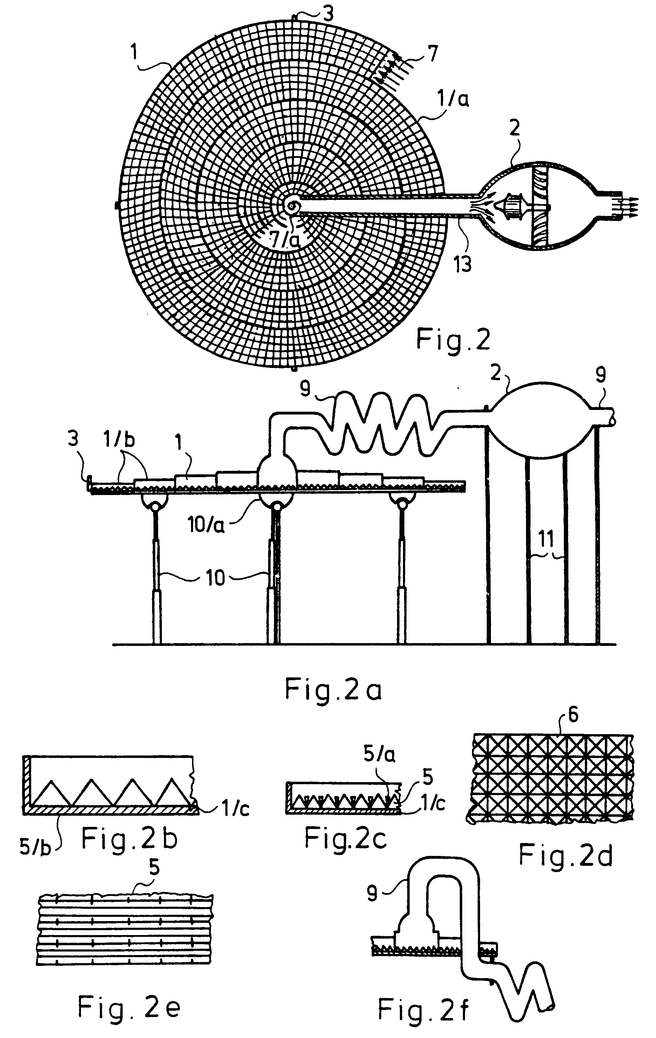

With solution introduced on figure 2. and figure 2e. the base plate of plane collector 1 is made to approximately circle form on which baffles 1/a are fixed vertically going along spiral line and distributing the base plate for equal fields. The most inside/outside arks of baffles 1/a are made as side walls maintaining outside closing of the collectors to side direction. Because of reducing the convection radiation loss insulation plate 1/c with appropriate thickness is mounted on the base plate. Inlet 7 furnished with air filter is located at the farthest point of the spiral line and outlet 7/a and to this connected air conducting pipe 9 or 13 with rigid or flexible wall are located to the approximately circuit shaped space flanked by the most inward point of the spiral line. Air conducting pipe 13 as well as 9 are connected directly to a favourable shaped and planed the dimension properly air pump 2 /ventilator being able to function on more stages. In that case when rigid air conducting pipe 13 for supplying hot air in front of the air pump 2 is implemented than behind the air pump 2 flexible air conducting pipe 9 should be implemented.

An absorbing plate 6 convex pyramid shaped on proper way on insulating plate 1/c fixed on the base plate is located on the surface flanked by the baffles 1/a going along spiral line which gathers/absorbs the heat energy of the incident and scattered solar radiation and it is warming up and transfers the heat energy to the air and warms it up above flanked from the upside direction by covering plate 1/b. Side walls as well as covering plate 1/b, covering the total surface of the plane collector 1, fixed on the vertical edges of the baffles 1/a on air tight way assures the reflection of heat beams /green house effect/.

In an other possible manufactured form absorbing plate 5 black coloured going parallel with bafflers 1/a is shaped to triangle cross section with acute angle and wedge shape. Endeavouring to achieve better efficiency in the wedge-shaped gape located at the base of the triangle with acute angle additional baffles 5/a run parallel in the high of two third of the slope sides of the triangle on which wedge-shaped baffles in vertical position distributed on proportional way are fixed assuring the turbulent flow.

In one possible solution for moving in two direction and for following the sun the plane collector 1 supporting moving lags 10 are employed constructed telescopic way and moved by hydraulic system, which function as hydraulic working cylinders. The upper end of the supporting moving legs 10/a is formed as spherical joint and it is connected to the collector's down side surface base plate. Different parts of the hydraulic move system /pump. electrical motor, valves control equipment/ are placed in hydraulic centre 21. Holding legs fasten the house 11 made of insulating material walls containing the air pump 2.

Structure of plain collector 4 with rectangle shape is similar to plain collector 1. Black absorbing plate 5 or 6 is placed on insulating plate 1/c fixed on the base plate. Baffles 4/a fixed perpendicularly run parallel with side walls on long side and they ark on the sort side. Side walls 4/b of the plane collector 4 are coated with proper thick insulating layer. Outlet 7/a is located on opposite side of inlet 7 mounted with air filter to which air pump's 2 house is connected directly. Supporting moving legs 10 moved on hydraulic way are fixed with spherical joint 10/a to the down side surface of the base plate and the equipment for hydraulic movement are located in the hydraulic centre 21.

Plain collector 4 according to the invention in an other possible manufactured version the inlet 7 without air filter is fabricated in such a way that with a closely matching connector extension 8 an other or according to need more plane collector(s) can be connected in it.

Because of the parallel connection of plane collectors 4 flexible air conducting pipe could be coupled between the connector extensions 8 to avoid the shade effect of the collectors.

Plane collector 4/B introduced on the figures 4. and 4d is rectangle form and its base plate and insulating plate 1/c and absorbing plate 5 or 6 is formed in similar way as plain collector 4.
Inlets 7 furbished with air filter of plain collector 4/b are located on the back side perforated flanking walls of the plane collector 4/b. Outlets 7/a are near to the centre of the fastening field and the side walls are constructed parallel. Flexible air conducting pipe 9 is connected to the hot air conducting pipes 13 with rigid insulating wall.

Holding moving mechanism 12 moves and supports the plane collector 4/B. This structure contains the elements as follows: Keeping in direction of cogged screed 12/g is made by cogged cam rollers 12/a. Electrical motor 12/b drives bevel gear 12/h to which axel's end with helicoid gears the double cog-wheel 12/c is coupled and its outside wheel with larger diameter moves the screed 12/g upwards or downwards. Both moving devices are covered by rectangle shape house 12/i in pipe form up to the necessary height. The highest point of the cogged screed 12/g is formed as spherical joint and it is connected to the down side surface of the plain collector's base plate.

Figure 5. introduces a plain collector 1/A without baffle. It is plain collector 1/A with proper circuit shape which outside perimetric wall contains perforated inlets 7 furnished with air filters. There is a circuit shape outlet 7/a in the centre of plain collector 1/A which is conducted through the absorbing plate 5/a the insulating plate 1/c and base plate in vertical direction downwards and the hot air heated up is conducted into the insulated and rigid wall air conducting pipe 13 to which the flexible air conducting pipe 9 is coupled.
The sun following movement of the plain collector 1/A is created by the holding and moving leg 10 prepared as spherical joint 10/a type via hydraulic system. Absorbing plate 5/a is made to the shape of triangle with acute angle /wedge-shaped/which cross section is changing as moving in the collector field to the centre direction that the base of the triangle is getting shorter and angles belonging to the base converge to right angle.

Control of collector types have ben introduced for the time being and going to be introduced is made by computer base controlling centre 22 (see figure 1.) which is connected via cable to photodiodes 3, air pump 2, holding move leg 10 or holding move mechanism 12, hydraulic centre 21, battery unit 23, solar cell unit 20 charging the battery unit 23. and electrical motors 12/b.

All collectors subject to the invention are furnished with photodiodes 3 on the collectors' side wall. The device according to the innovation is heat energy utilizing device and heat accumulating device can be connected via a valve to the air path of any one of plain collectors' 1, 1/a 4, 4/a, 4/b flexible air conducting pipe 9 connected to the air pump 2. The heat accumulating device is formed in a container with insulating wall containing air labyrinth made of refractory bricks or it is as well a container with insulating wall furnished with closed inlet and outlet, in which one or more air path formed as coiler along helical line, where in the space between the container's wall and the coiler is filled with powder having good heat absorbing and heat transferring ability. The heat accumulating device can be switched on and off with the valve furnished in the hot air system according to the need.

Figure 6. introduces the heat utilizing device using heat produced by any of the plain collectors 1, 1/a 4, 4/a, 4/b. Structure and elements of the drying container 15 with rectangular cross section standing vertical position: Coat of the drying container 15 is made of expediently steel sheet with proper thickness painted gray or black on the outside surface and furnished with stiffeners, on which on the upper side there are both the product feeding pipe 14/d and air outlet pipe 15/f on its bottom side there are both the product emptying pipe 15/g and in appropriate high above the bottom plate and parallel to it on side heat air distributing pipe system 15/d with perforated wall.

Inside the drying container 15 there is an endless drying conveyer 15/a constructed sifter like and moving slantwise downwards and spanned with bearings mounted with rollers with cylindrical shape 15/b fixed to the side wall or consoles 15/h. At the edge of the conveyor a rim with proper hight and cut vertically in appropriate number according to the need is formulated. Dropping restoring container 15/c is fixed to the wall of the cylinder located between the wall of the cylinder and rollers with cylindrical shape 15/b.
Drying cylinder 15 is fixed by holding legs 15/e.

On both longer parallel sides of the drying container there are hot air injecting pipes on proper height directed inside with injectors and running around which are connected with one or more pipes to the hot air conducting pipe on the bottom of the drying container 15.

The drying conveyor's 15/a movent is provided by the outside conveyor moving disk 15/i which is placed on a joint shaft of conveyor moving cylinder roller 15/b inside of the drying container 15.

Elevator 14 is applied for supplying the product into the drying container 15. There is an endless conveyor belt 14/a expediently constructed with scoops stretched by cylinders 14/b functioning as roller in tube with rectangle cross section. Container 14/c provides the loading up with product prior processing for the elevator 14 which container is coupled to the elevator device via a pipe line on which wall the product goes through and it arrives on the conveyor belt 14/a. The elevator device and the container 14/c are fixed by holding legs 14/e. Outside disc 14/g fixed on the joint shaft with down side cylinder 14/b and the out side conveyor moving disk are driven by electrical motor 16.

Figure 7. introduces the drying cylinder 17 standing vertical position which coat is made of expediently steel sheet with proper thickness painted gray or black on the outside surface and furnished expediently with stiffeners. Into the drying cylinder 17 on its upper side via an opening the product feeding pipe 14/d is coupled and via the covering plate's two or more points the air outlet pipe 17/h is coupled and on its bottom side the product emptying pipe 17/i and in appropriate high above the bottom plate and parallel to it on side heat air distributing pipe system 17/e with perforated wall are placed. In the centre of the drying cylinder 17 there is rotating shaft 17/c with upside and down side bearings 17/g and fixed with stiffening bars 17/f. On the peak point of the rotating shaft 17/c and on the centre point of its inside wall a whirler 17/a with conical shape and made of sifter like structure material is placed and fixed with supporting bars 17/j. On vertical direction to the side wall of the conical shape whirler 17/a directly upside on the inside wall of the drying cylinder 17 and lower from the whirler 17/a cornet shape fixed whirler 17/b is coupled with the supporting bars 17/j.
There is a distance between the rotating conical shape whirler's 17/a out side contour/edge and the side wall of the cornet shape fixed whirler 17/b located nearest to the rotating one, which assures the overcome of the product for drying without restrain.Driving of the rotating shaft 17/c is made by electrical motor 16 via driving belt and driving wheel furnished with conical wheel 17/d. Air distributing pipe system 17/e with perforated wall formed in expedient way assures the homogeneous hot air distribution. On the inside wall of the drying cylinder 17 on proper height /from the bottom plate on two third height approximately/ there is a ring form hot air injecting pipe which is connected with conducting pipes going on the wall of the drying cylinder 17 to the hot air conducting pipe. The drying cylinder 17 is fixed by holding legs 17/k.
In morning hours the control unit 22 with computer in control centre in right time according to the program fed in previously in the case of the plain collector 1/A and 4 turns on the hydraulic centre 21 which operates the hydraulic working cylinder of the holding move lags 10 in that way that those located in East direction are moved upwards vertically and those located in West directing are moved down in the same time until the collectors 1, 1/A, 4, 4/A, 4/B are positioned perpendicularly to the direction of the sun. After this the computer evaluates the signal received from the photodiodes 3 and compares it to the stored one in its memory and in the case of deviation it adjusts the direction on the base of the data measured by the photodiodes. During the day the perpendicular movement to the direction of sun /sun following/ is made by the computer according to the fed program checking periodically the movement's accuracy comparing it to the values received from the photodiodes.
All four /in case more than this than all of them/ holding moving legs' 10 morning starting positions are programmed in the computer separately. The daily program contains the total way of the working cylinder of holding moving leg 10 in millimetre depending on time according to the seasons and hours of day /proper to the incident radiation of the sun/. Thumb rule is that following the setting up working cylinders in East direction with the lowest position are moving upwards with different pace and working cylinders in West direction being on highest position in morning are moving downwards with different pace as well.

Length of defined way in millimetre of one working cylinder of the holding moving leg 10 is set for all minutes of the day proper to the season and position of sun. To all minutes of the day belongs a working way set in millimetre performed by the working cylinder.

Move mechanism function introduced with plain collector 4/B: The computer starts to operate in the morning time according to the calender on the base of the program the electrical motor 12/b in East direction capable to function ion more stage and the motor starts to move the cogged screed 12/g vertically downwards with moving cog wheels 12/h and 12/c and in the same time the electrical motor 12/a in West direction is operated and it moves upwards vertically the cogged screed with moving the cog wheels.

Accuracy of positioning according to the program is compared with the signal received from the photodiodes 3 by the computer it adjusts the position angle according to the need.

Continuous movement during the day of the collector 1, 1/A, 4, 4/A, 4/B, 4/C to sun direction in perpendicular way is made by electrical motor 16 on each holding moving leg separately on periodic operation way decided in the program.

According to the morning set up the control unit with computer starts to operate the air pump 2 and the air warmed up by the absorbing plate 6 located in the gathering field of the collectors is pumped via the flexible pipe 9 to the working sone, namely it is conducted into the drying container 15 via the inlet pipe with perforated wall and via the air distributing pipe system 15/d and the hot air distributed homogenously streams upwards vertically in the container.

After this the control unit with computer starts to operate the driving electrical motor 16 which drives the outside moving disk 15/i and it starts the drying conveyor 15/a and in the same time it turns on to rotate the cylinder 14/b with the driving of outside wheel 14/b on the under driving shaft of cylinder 14/b of the elevator 14 which moves upward the conveyor belt 14/a. Product supplied previously into the container 14/c goes to the shovel containers of the elevator belt 14/a because of opening feeder 14/f mounted in the connecting pipe and because of the upward movement of the belt and the product through the product feeding pipe 14/d spreads on drying belt 15/a of the drying cylinder 15. Flexible side walls with proper height and with cut in on the edge of the drying belt 15/a hinders the product to fall down from the drying belt 15/a.

The drying belt 15/a achieving the roller 15/b with cylinder shape pours the product from its surface into the restoring container 15/c where from the product comes to the surface of the under drying belt 15/a and spreading there homogeneous it moves downward together with the belt.

This process is repeated until the product goes to outside from the drying container via the product emptying pipe 15/g into an appropriate container as final product. The product moving down and meeting with hot air the product loses its moisture contain in the necessary level.

The control unit with computer switch on the electrical motor 16 with more operating stages on such level of rotating which is proper for the intensity of the sun radiation and for the moisture contain of the product for drying. Level of drying can be controlled with operating the feeder 14/f built in the inlet pipe of the container 14/c. above this the automatic control can be programmed with manual adjustment.

Drying cylinder 17 functions as follows. Electrical motor 16 drives the driving disk installed with conical wheel 17/d and it moves the rotating shaft 17/c staying vertically in the centre of the drying cylinder 17, and the conical shape whirlers 17/a fixed on it start to rotate. The product for drying brought in via the product feeding pipe 14/d from the elevator 14 drops and spreads on the conical shape whirlers 17/a and from there the product whirls down on the cornet shape whirler 17/b fixed on the inside surface of the drying cylinder where from it whirls slowly down on the conical shape whirlers 17/a and from them again to the cornet shape whirler 17/b and finally via the cornet form gathering device located on the bottom of the cylinder and via the product emptying pipe 17/i the final product goes out and it is gathered in a proper receptacle. Hot air goes into the drying container through the hot air pipe than via the air distributing pipe system 17/e with perforated wall assuring the homogeneous hot air distribution the hot air streams upwards in the drying cylinder 17 meanwhile drying the product going downwards than hot air leaves the container on the upper side of the drying cylinder 17 via their outlet pipe 17/h.

Figure 8. introduces a collector system formed in plantation form constructed with cylinder paraboloid set up side by side to each other on movable holding plate 18.

The collector system contains expediently six or more than this cylindrical parabolic collectors 18/a connected to each other as functioning and structural elements as well.

Cylindrical parabolic collector 18/a with requested length and aperture with high reflexing ability on its inside concave surface /high level mirroring/ has in its focal point an absorbing working tube 18/b with proper diameter and on its outside surface black or gray coloured with closed or with entirely or partially perforated wall, which is fixed by holding bars 18/p on its both ends to the collector's body. Inlet of the absorbing working tube 18/b is closed with a disc on which through goes a spiral shaft 18/c for transporting the product for drying or processing into the absorbing working tube 18/b. The spiral shaft 18/c is formed pipe like way and among its spirals on the shaft small holes/openings/ starting from the inside cave of the axel are made in quantity according to the need for driving out the hot air streaming in the pipe like inside cave. Driving shaft of the spiral shaft 18/c is fixed in turnable form on the double frame 18/d which has bearings. The spiral shaft's 18/c driving axel furnished with edge and bearing is placed in the wider part of the bearded double frame 18/d on that way that the end of the pipe like cave going along the middle part of the driving axel as well as its inlet is opposite to the outlet of the hot air inlet pipe 18/f furnished with edge on its extended axel line. On this way the hot air can stream freely coming out from the end of hot air inlet pipe 18/f mounted on fix way to the out side of the double frame 18/d into with bearing the pipe like cave in the spiral shaft 18/c rotating in bearing.
On the figures 8c. and 8d. the spiral shaft 18/c was manufactured in solid form and under it there is the air inlet pipe 18/t perforated upside which is for the air conducting in into the absorbing working tube 18/b. On the upper side of the air inlet pipe holes are made on its wall located in vertical position along the long direction line in that way that these holes coincide with the holes downwards on the vertical wall of the absorbing working tube 18/b. There are insulating rings by the coinciding holes between the two pipes' wall. The surface of the most upper vertical out side wall of the air inlet pipe 18/t and the lowest part of the wall of the absorbing working tube 18/b are fixed together with permanent binding in such a way that the holes between them coincide and on this way from the air inlet pipe 18/t out streaming hot air via the upper holes streams via the holes on the down side wall of the absorbing working tube 18/b into this tube and through the product driven by the spiral shaft the air leaves the absorbing working tube via the holes on its upper side wall into the open air.
On the figure 8a. the spiral shaft 18/c was manufactured in solid form and above the absorbing working tube 18/b parallel with it a properly planed vapour-drain pipe 18/cs in cross section goes on which is connected by vertical thin pipes with fix binding to the absorbing working tube 18/b with solid wall.

Product for processing is placed in the feeding container 19 while the processed product is collected in the receptacle 18/o via the emptying pipes. Coupling pipes 18/r start from the feeding container 19 in rigid wall form which continuous in flexible pipes to the direction of the absorbing working tube 18/b. The collector end of the flexible pipe line is connected to the turnable pipe-stub coming from the left upper side end of the absorbing working tube 18/b according the figure with fix binding. The product feeding and emptying pipes as well as between the neighbouring collectors 18/a arcing pipes on the beginning of the collectors as well as through arcing pipes 18/g on the end of the collectors /latest are the extension of the absorbing working tubes 18/b/ are formed covering each others in such a way that in the covered pipe in the centre of the covering there is an expediently formed aperture with proper dimension that the product can overcome from one pipe to the other without restrain.

Driving of the spiral shaft 18/c is made with the disk fixed on the driving shaft between the beard double frame 18/d. This driving disk is connected with driving belt to the driving mechanism 18/s containing the driving electrical motor, holding frame, cog-wheels, double disks under the move holding plate 18 supporting and move the collectors. Disk mounted on the driving shaft is connected with driving belt to the smaller diameter disk of double one with common axle located vertically under the disk on the driving shaft and it drives the shaft in clockwise direction. Exception from this are the cases of collector 18/a second and fifth from up to down direction according the figure where the spiral shafts 18/c turn opposite clockwise /previous turns in clockwise/ and this rotation is assured by the disk mounted on common shaft with the cog-wheel driven by cog-wheel mounted on the shaft of the bigger disk belonging to the second and fifth collectors 18/a. Driving of the bigger disk is made by a separate electrical motor 18/h able to work on more stages with the same diameter disk on its shaft via cogged driving belt.

Collectors' 18/a move fixed on movable holding plate 18 can be made as follows. On the shaft of the electrical motor 18/h able to work on more stages there is a cog-wheel with fixed binding and it is matching with the cog-wheel moved vertically on the vertical axel by two electric magnet coils and it drives the shaft in the desired /given by the control unit/direction. Opposite to the cog-wheel on the shaft of the electrical motor the centre of the long shaft is cogged as long as the circumference of the cog-wheel in that way that the centre point /cogging in negative direction/ of the cog-wheel on the long shaft is matching. The electric magnet coil on left side according to the figure installed on the holding table during its functioning moves on the cogged part of the long shaft the cog-wheel beside the side direction turnable wheel installed on its front and backwards moving shaft than in the case of stopping to function the opposite side / being on the other side of the cog-wheel/ wheel moved by electric magnet coil pushes back the cog-wheel in its original position after stopping the electrical motor 18/h.

A cog-wheel with proper diameter is fixed in the other end of the halving point of the collector's segment on the other end of the long shaft which moves the cogged screed 18/j /or cogged chain/ in the right direction and level in front and back direction. The cogged screed 18/j goes under the cylindrical parabolic collector 18/a located on holding legs via the centre line of the expediently proper length of the holding plate's 18 width. Cogged guide rollers 18/ly placed in proper density support and keep in direction the rigid cogged screed 18/j on the move mechanism. The shafts of the cogged conducting rollers with bearings on both ends are fixed with supporting console on the holding move plate 18. Both end of the cogged screed 18/j are furnished with bumper to avoid the over pulling of the screed. Above the cogged screed 18/j there is a cog-wheel with proper diameter connected to the previous one's cogs in the axel line of the cylindrical parabolic collector 18/a under its lowest point which cog-wheel is connected to the cogged screed to the outside surface of the cylindrical parabolic collector 18/a and the cog of cogged screed 18/j.

There are a down side edge 18/k and an upper side edge 18/sz constructed on expedient way and furnished with roll bearings on the both long side end of the body of the cylindrical parabolic collector 18/a which edges are extended on the total width of collector 18/a. Edge 18/k is fixed with solid binding to the holding legs fastened on the holding move plate 18 in the vertical axel of the collector. Cogging 18/m is formed on out side of the upper side of the upside edge 18/sz on its total length. Cog-wheel 18/1, which is moveable with a vertical shaft, is connected to this cogging 18/m. The shaft of the cog-wheel 18/1 is attached to a electro magnetic pulling disk which is fixed to the outside of the down part of the edge 18/k on that way that the pulling disk turns on or off the couple between the cog-wheel 18/1 and the cogging 18/m depending on the controlling position. Upper edge 18/sz extends into the down side edge 18/k on vertical direction downwards which upper edge's 18/sz down part is formed bearing like. Guide bar 18/ty is attached to the both side of the upper edge 18/sz which guide bar 18/ty is enclosed by the double screed of down side edge 18/k from down and from both sides directions. There are one-one wedge-shaped buffer on both end of the guide bar 18/ty which buffer impedes over rotation. Total weight of the collector 18/a is put on the upper edge 18/sz which puts it via the rollers /balls/embedded into the down side edge 18/k which put it further via the holding legs 18/ny to the holding plate 18. Movement of the holding plate 18 is made by expediently hydraulic operated holding move legs 10 or holding move mechanism 12 operated by electrical motor 12/b having been introduced previously. The control unit 22 with computer directs according to its prior fed program the collector 1, or 1/A, or 4, or 4/A the solar cell unit 20 and the holding move plate 18 of the cylindrical parabolic collector to East into the direction of sun in the morning hour than it checks the direction and adjusts the direction according to the need with the signals received from the photodiodes 3.

North-South movement of the cylindrical parabolic collector 18/a after setting the holding move plate 18 is made with electrical motor 18/h as follows. The control unit with operating of the pulling disk mounted on the exterior side of the edge 18/k down and with the cog-wheel 18/1 fixed on the shaft of the pulling disk lifts the cog-wheel 18/1 out of the cogging 18/m furnished on the upper edge 18/sz and on this way it makes free the movement of the body of the collector 18/a. After this the control unit with starting the electrical motor 18/h moves the cogged screed 18/j with the cog-wheel coupled to it in the requested direction and measure. The cogged screed 18/j moving on the cogged guide rollers 18/ly rotates the cog-wheel 18/gy which moves the cogged screed 18/j attached to the external side of the collector and it makes the proper position of the collector to North-South direction.

Move to East-West direction is made by the control unit continuously than periodically stops this operation according to the need and it makes adjustment of North-South direction as well.

Having stopped the adjustment of direction positioning the control unit turns on the air pump 2 and after this it opens on requested level the feeding bolt located in the coupling pipe 18/r and in the same time it starts to rotate the spiral shaft 18/c. The spiral shaft 18/c is rotated in that way that the control unit 22 switches on the electrical motor 18/h operating the driving device 18/s which drives with the disk mounted on its shaft the other disk with bigger diameter than disk with smaller diameter mounted on common shaft respectively in the case of double cod-wheel the disk mounted on the shaft of the upper co-wheel turns it via the belt driving the disk of the spiral shaft 18/c.

The product moving into the absorbing working tube 18/b is warmed /hot/ up by the mirroring surface of the hot air pumped via the spiral shaft drys it. Final product is gathered via the outlet pipe in the receptacle 18/0.
Processing level /drying level/ of the product is set by the control unit furnished with computer via selecting the rotation speed of the spiral shaft 18/c as well as the opening level of the feeding bolt located in the coupling pipe 18/r.

In an other possible manufactured form the wall of absorbing working tube 18/b and the spiral shaft 18/c is solid and they are manufactured without air injection. Vapour generated in the absorbing working tube 18/b is conducted away by a separated pipe going above the absorbing working tube 18/b connected to it with small pipes. Vapour generated is condensed in the outlet pipe and it is conducted into a container where it is accumulated. Different vapour outlet per each collector 18/a makes it possible to separate complex materials and compound with heat treatment.

## Claims

1. Device utilizing solar energy especially for drying, roasting of agricultural products, finalizing distillation and evaporation, separating of complicated compounds, which has:
cylindrical paraboloid collectors (18/a) placed on a moveable consoling plate, the backside of the device being furnished with a mechanism for holding and moving the collectors (18/a), and
an apparatus conducting the collectors' heat energy connected to the collectors (18/a),
**characterized in that** the collectors (18/a) are oriented parallel, are deployed in plantation way on a holding plate (18), and are movable in the direction of the sun,
wherein in the focus of each collector (18/a) there is provided an absorbing working tube (18/b), the absorbing working tube (18/b) being on its outside surface black or gray colored, closed or with entirely or partially perforated walls, the absorbing working tube (18/b) being fixed on its both ends, the absorbing working tubes (18/b) being connected to each other over a respective arcing pipe (18/x) and with a direct outlet,
a pipe like spiral shaft (18/c) for transporting the product for drying being provided in each absorbing working tube (18/b), each pipe like spiral shaft (18/c) being solid or cavernous and rotatable with an external drive to the direction of the product's transport, each pipe like spiral shaft (18/c) being installed on a double frame (18/d) with a bearing, wherein along the center line of the spiral shaft (18/c) a pipe like cave is formed, the front side of which being connected to a hot air inlet pipe (18/f) and the outlet of which being on the spiral shaft (18/c) among spiral plates,
wherein the product for processing is placed in a product feeding container (19), the product feeding container (19) being connected with a sloping, preferably with a flexible connecting pipe (18/p) to the product receiving side of the absorbing working tube (18/b), and
wherein the end of the absorbing working tube (18/b) is connected via an outlet pipe to a gathering container (18/o).

2. Device according to claim 1, **characterized in that** the spiral shaft (18/c) is made of a solid material, an inlet pipe (18/t) with an upside perforated wall for conducting air into the heat air absorbing working tube (18/b) being fixed under the spiral shaft (18/c), the upper part of the air inlet pipe (18/t) having holes made in vertical position to coincide with holes directed downwards on the vertical wall of the absorbing working tube (18/b).

3. Device according to claim 1, **characterized in that** the spiral shaft (18/c) is made of solid material, a vapor drain-pipe (18/cs) being provided above the spiral shaft (18/c) and the absorbing working tube (18/b), the vapor drain-pipe (18/cs) extending parallel to the absorbing working tube (18/b), thin vertical small pipes connecting the vapor drain-pipe (18/cs) with the solid wall of the absorbing working tube (18/b), and
an outlet of the vapor drain-pipe (18/cs) being connected to a gathering container (18/o).

4. Device according to one or more of claims 1-3 further comprising a control unit for adapted for setting the processing level or the drying level of the product.

5. Device utilizing solar energy, especially for drying and roasting of agricultural, as well as food processing products, including:
a collector (C) fixed on a frame (K) and on the backside of the frame (K);
a mechanism moving the collector (C), such that the collector (C) is adjustable to the direction of the solar radiation, the collector (C) having apertures for taking off the heat energy;
one or more, preferably four supporting-moving mechanisms (L) connected at one end to the frame (K), and moving and adjusting the collector (C) in more directions, the other end of the supporting-moving mechanisms (L) being connected to a fixed base surface (A);
a black colored absorbing plate (5), preferably with pyramidal or wedge shape placed on an insulating plate (1/c), the insulating plate (1/c) laying on a base plate of the collector (C);
a translucent covering plate (1/b) which covers all the surface;
baffles (T) placed between the base plate and the translucent covering plate (1/b), the baffles(T) being perpendicular to the base plate and parallel to each other to provide for an air current path, the farthest baffles (T) forming a side wall;
an inlet (7) of the air current path, the inlet (7) being provided with a filter,
an outlet (7/a) opposite to the inlet (7), and
an air pump house (2) having an inlet connected to the outlet (7/a) and an outlet to which the device (B) utilizing the heat energy is connected.

6. Device according to claim 5, **characterized in that** the collector (C) is constructed by a helical plane collector (1), and **in that** its air current path is constructed in ribbon type way.

7. Device according to claim 5, **characterized in that** the collector (C) is constructed by a plane collector (4) with rectangle shape, and its air current path is constructed in ribbon type way and is arched.

8. Device according to claim 5, **characterized in that** the collector (C) is constructed by a plane collector (4/b) with rectangle shape, the inlet (7) thereof being furnished with an air filter placed on the perforated bordering walls of the plane collector (4/b), and the outlet (7/a) thereof being located near the center of the plane collector (4/b).

9. Device according to claim 5, **characterized in that** the collector (C) is constructed by plane collector (1/A) with circular shape, and the inlet (7) thereof being furnished with an air filter placed on the perforated bordering walls of the plane collectors (1/A), and the outlet (7/a) being located in the center of the plane collector (1/A).

10. Device according to any of the claims 5-9, **characterized in that** the frame (K) itself holds the collector (C) and is constituted by the base plate of the collector (C).

11. Device according to any of the claims 5-10, **characterized in that** each supporting-moving mechanism (L) is constructed by a telescopic leg (10) or by a screed (12g) moved with a cog-wheel.

12. Device according to any of the claims 5-11, **characterized in that** between the outlet (7/a) and the device (B) utilizing the heat energy there is provided an air conducting tube (13) with an insulating rigid wall and/or a flexible air conducting tube (9) being connected to the inlet and outlet of the air pump house (2).

13. Device according to claim 12, **characterized in that** between the device (B) utilizing the heat energy and the outlet (7/a) of the collector (C), serial to the air path of the air pump house (2), there is provided a container with an insulating wall containing an air labyrinth made of refractory bricks or a coiler bent in a helical line for the air path inside the container as a heat accumulator installed on a periodical way in the space between the container's walls and the coiler filled with powder or granular substance and having outlet terminal.

14. Device according to claim 12 or 13, **characterized in that** the device (B) utilizing heat energy is a drying container (15) with a rectangular cross section standing in a vertical position, wherein on the upper side of the container (15) there are both a product feeding pipe (14/d) and an air outlet pipe (15/f), wherein on the bottom side of the container (15) there are both a product emptying pipe (15/g) and, in appropriate height above a bottom plate and parallel to it on a side, a heat air distributing pipe system (15/d) connected with a hot air inlet pipe (18/f), and **in that**
inside the drying container (15) there is: an endless drying conveyer (15/a) constructed sifter like and moving slantwise downwards and spanned with bearings mounted with rollers (15/b) with cylindrical shape fixed to consoles; and a dropping restoring container (15/c) fixed to the wall of the drying container (15) and located between the wall of the drying container (15) and the rollers (15/b) with cylindrical shape, wherein
an elevator (14) is connected to the product feeding pipe (14/d), and the loading container's outlet pipe of the elevator (14) is furnished with a controllable loading equipment (14/f).

15. Device according to claim 12 or 13, **characterized in that** the device (B) utilizing heat energy is a drying cylinder (17) with standing vertical position, wherein on the upper end of the drying cylinder (17) there are both a product feeding pipe (14/d) and an air outlet pipe (17/h), wherein on its bottom end there are both a product emptying pipe (17/i) and, in appropriate high above the bottom plate and parallel to it on a side, a heat air distributing pipe system (17/e) connected with a hot air inlet pipe (18f),
wherein on the drying cylinder's (17) central axle there is a rotating shaft (17/c) on which above each other whirlers (17/a) with a conical shape and made of sifter like mechanism material are fixed, and opposite to all on the drying cylinder's (17) inside wall whirlers (17/b) with cornet shape and made of sifter like mechanism material are fixed with supporting bars (17/j) in such a way, that a distance ensuring the passage without restrain of a product between the rotating conical-shape whirler (17/a) and the cornet shape whirler (17/b) is formed, and
wherein an elevator (14) is connected to the feeding pipe (14/d).

## Patentansprüche

1. Eine Vorrichtung, die Solarenergie verwendet, besonders zum Trocknen, Rösten von landwirtschaftlichen Produkten, für die abschließende Destillation und Verdunstung, das Trennen von komplizierten Verbindungen, die folgendes hat:
zylindrische Parabol-Kollektoren (18/a), die auf einer beweglichen Konsolen-Platte platziert sind, wobei die Rückseite der Vorrichtung mit einem Mechanismus zum Halten und Bewegen der Kollektoren (18/a) ausgestattet ist, und
eine Vorrichtung, die die Wärmeenergie der Kollektoren leitet und mit den Kollektoren (18/a) verbunden ist,
**dadurch gekennzeichnet, dass** die Kollektoren (18/a) parallel ausgerichtet sind, in Plantage-Form auf einer Halteplatte (18) bereitgestellt werden und in Richtung der Sonne beweglich sind,
wobei im Fokus jedes Kollektors (18/a) ein absorbierendes Arbeitsrohr (18/b) bereitgestellt wird, wobei das absorbierende Arbeitsrohr (18/b) an seiner Außenfläche schwarz oder grau ist, geschlossen oder mit ganz oder teilweise perforierten Wänden, wobei das absorbierende Arbeitsrohr (18/b) an beiden Enden befestigt ist, wobei die absorbierenden Arbeitsrohre (18/b) miteinander über eine entsprechende bogenförmige Röhre (18/x) verbunden sind und mit einem direkten Auslass,
eine röhrenartige Spiralwelle (18/c) zum Transportieren des zu trocknenden Produkts, die in jedem absorbierenden Arbeitsrohr (18/b) bereitgestellt wird, wobei jede röhrenartige Spiralwelle (18/c) massiv oder porös ist und drehbar mit einem externen Antrieb in die Richtung des Produkttransports, wobei jede röhrenärtige Spiralwelle (18/c) auf einem Doppelrahmen (18/d) mit einem Lager installiert ist, wobei entlang der Mittellinie der Spiralwelle (18/c) eine röhrenartige Höhlung geformt wird, deren Vorderseite mit einer Einlassröhre (18/f) für heiße Luft verbunden ist und deren Auslass sich an der Spiralwelle (18/c) zwischen Spiralplatten befindet,
wobei das zu verarbeitende Produkt in einen Produkt-Zufuhr-Behälter (19) platziert wird, wobei der Produkt-Zufuhr-Behälter (19) mit einer Schräge verbunden ist, vorzugsweise mit einer flexiblen Verbindungsröhre (18/p) zu der Produkt-Empfangsseite des absorbierenden Arbeitsrohrs (18/b), und
wobei das Ende des absorbierenden Arbeitsrohrs (18/b) über eine Auslass-Röhre mit einem Sammelbehälter (18/o) verbunden ist.

2. Vorrichtung nach Anspruch 1, **dadurch gekennzeichnet, dass** die Spiralwelle (18/c) aus einem massiven Material besteht, wobei eine Einlassröhre (18/t) mit einer perforierten Oberseitenwand zum Leiten von Luft in das Arbeitsrohr (18/b) zum Absorbieren heißer Luft unter der Spiralwelle (18/c) befestigt ist, wobei der obere Teil der Luft-Einlassröhre (18/t) Löcher hat, die in vertikaler Position ausgebildet sind, um Löchern zu entsprechen, die auf der vertikalen Wand des absorbierenden Arbeitsrohrs (18/b) abwärts gerichtet sind.

3. Vorrichtung nach Anspruch 1, **dadurch gekennzeichnet, dass** die Spiralwelle (18/c) aus massiven Material besteht, wobei eine Dampf-Ablassröhre (18/cs) oberhalb der Spiralwelle (18/c) und des absorbierenden Arbeitsrohrs (18/b) angebracht ist, wobei sich die Dampf-Ablassröhre (18/cs) parallel zum absorbierenden Arbeitsrohr (18/b) erstreckt, wobei dünne vertikale kleine Röhren die Dampf-Ablassröhre (18/cs) mit der massiven Wand des absorbierenden Arbeitsrohrs (18/b) verbinden, und
ein Auslass der Dampf-Ablassröhre (18/cs) mit einem Sammelbehälter (18/o) verbunden ist.

4. Vorrichtung nach einem oder mehreren der Ansprüche 1 bis 3, die weiter eine Steuereinheit umfasst, die angepasst ist zum Einstellen des Verarbeitungsniveaus oder des Trocknungsniveaus des Produkts.

5. Vorrichtung, die solare Energie nutzt, besonders zum Trocknen und Rösten von landwirtschaftlichen sowie lebensmittelverarbeitenden Produkten, die folgendes einschließt:
einen Kollektor (C), der an einem Rahmen (K) und an der Rückseite des Rahmens (K) befestigt ist;
einen Mechanismus, der den Kollektor (C) bewegt, so dass der Kollektor (C) an die Richtung der Sonneneinstrahlung anpassbar ist, wobei der Kollektor (C) Öffnungen hat, um die Wärmeenergie abzuleiten;
einen oder mehrere, vorzugsweise vier, unterstützende-bewegende Mechanismen (L), die an einem Ende mit dem Rahmen (K) verbunden sind und die den Kollektor (C) in mehrere Richtungen bewegen und einstellen, wobei das andere Ende der unterstützenden-bewegenden Mechanismen (L) mit einer festen Basisoberfläche (A) verbunden ist;
eine schwarzfarbige absorbierende Platte (5), vorzugsweise in Pyramiden- oder Keilform, die auf eine Isolierplatte (1/c) platziert ist, wobei die Isolierplatte (1/c) auf einer Grundplatte des Kollektors (C) liegt;
eine lichtdurchlässige Deckplatte (1/b), die die ganze Oberfläche bedeckt;
Ablenkplatten (T), platziert zwischen der Grundplatte und der lichtdurchlässigen Deckplatte (1/b), wobei die Ablenkplatten (T) rechtwinklig zur Grundplatte und parallel zueinander sind, um einen Weg für den Luftstrom bereitzustellen, wobei die am weitesten entfernten Ablenkplatten (T) eine Seitenwand bilden;
einen Einlass (7) des Luftstromwegs, wobei der Einlass (7) mit einem Filter ausgestattet ist,
einen Auslass (7/a), der dem Einlass (7) gegenüberliegt, und
ein Luftpumpen-Gehäuse (2), das einen Einlass hat, der mit dem Auslass (7/a) verbunden ist, und einen Auslass, mit dem die Vorrichtung (B), die die Wärmeenergie nutzt, verbunden ist.

6. Vorrichtung nach Anspruch 5, **dadurch gekennzeichnet, dass** der Kollektor (C) durch einen spiralförmigen ebenen Kollektor (1) gebildet ist, und **dadurch**, dass sein Luftstromweg bandartig gebildet ist.

7. Vorrichtung nach Anspruch 5, **dadurch gekennzeichnet, dass** der Kollektor (C) durch einen ebenen Kollektor (4) in Rechteckform gebildet ist und dass sein Luftstromweg bandartig gebildet und gewölbt ist.

8. Vorrichtung nach Anspruch 5, **dadurch gekennzeichnet, dass** der Kollektor (C) durch einen ebenen Kollektor (4/b) in Rechteckform gebildet ist, wobei der Einlass (7) davon mit einem Luftfilter ausgestattet ist, der auf den perforierten angrenzenden Wänden des ebenen Kollektors (4/b) platziert ist, und wobei sich der Auslass (7/a) davon nahe der Mitte des ebenen Kollektors (4/b) befindet.

9. Vorrichtung nach Anspruch 5, **dadurch gekennzeichnet, dass** der Kollektor (C) durch einen ebenen Kollektor (1/A) in Kreisform gebildet ist und der Einlass (7) davon mit einem Luftfilter ausgestattet ist, der an den perforierten angrenzenden Wänden der ebenen Kollektoren (1/A) angebracht ist, und wobei der Auslass (7/a) sich in der Mitte des ebenen Kollektors (1/A) befindet.

10. Vorrichtung nach einem der Ansprüche 5 bis 9, **dadurch gekennzeichnet, dass** der Rahmen (K) selbst den Kollektor (C) hält und von der Grundplatte des Kollektors (C) gebildet wird.

11. Vorrichtung nach einem der Ansprüche 5 bis 10, **dadurch gekennzeichnet, dass** jeder unterstützende-bewegende Mechanismus (L) von einem Teleskop-Bein (10) oder einer Führungsschiene (12g) gebildet ist, die mit einem Zahnrad bewegt wird.

12. Vorrichtung nach einem der Ansprüche 5 bis 11, **dadurch gekennzeichnet, dass** zwischen dem Auslass (7/a) und der Vorrichtung (B), die die Wärmeenergie nutzt, ein Luftführungsrohr (13) mit einer isolierenden starren Wand und/oder ein flexibles Luftführungsrohr (9) bereitgestellt wird, das mit dem Einlass und Auslass des Luftpumpengehäuses (2) verbunden ist.

13. Vorrichtung nach Anspruch 12, **dadurch gekennzeichnet, dass** zwischen der Vorrichtung (B), die die Wärmeenergie nutzt, und dem Auslass (7/a) des Kollektors_(C) seriell zum Luftweg des Luftpumpengehäuses (2) ein Behälter mit einer isolierenden Wand bereitgestellt wird, der ein Luftlabyrinth enthält, das aus Schamottesteinen hergestellt ist, oder einen Coiler, der in einer spiralförmigen Linie gebogen ist, für den Luftweg innerhalb des Behälters als ein Wärmespeicher, der auf einem periodischen Weg im Raum zwischen den Wänden des Behälters installiert ist, und der Coiler gefüllt ist mit Pulver oder körniger Substanz und ein Auslass-Anschluss hat.

14. Vorrichtung nach Anspruch 12 oder 13, **dadurch gekennzeichnet, dass** die Vorrichtung (B), die Wärmeenergie verwendet, ein Trocknungsbehälter (15) mit einem rechteckigen Querschnitt ist, der in einer vertikalen Position steht, wobei sich an der Oberseite des Behälters (15) sowohl eine Produkt-Zufuhr-Röhre (14/d) als auch eine Luft-Auslass-Röhre (15/f) befinden, wobei sich an der Unterseite des Behälters (15) sowohl eine Produkt-Auslass-Röhre (15/g) als auch in angemessener Höhe über einer Grundplatte und parallel zu ihr an einer Seite ein Warmluft-Verteiler-Röhrensystem (15/d) befinden, das mit einer Heißluft-Einlassröhre (18/f) verbunden ist, und **dadurch**, dass
sich innerhalb des Trocknungsbehälters (15) folgendes befindet: ein Trocknungs-Kreisförderer (15/a), der siebartig gebildet ist ist und sich schräg abwärts bewegt und mit Lagern überspannt ist, die auf Rollen (15/b) mit zylindrischer Form gelagert sind, die an Konsolen befestigt sind; und ein Fallstoff-Wiederherstellungs-Behälter (15/c), der an der Wand des Trocknungsbehälters (15) befestigt ist und der sich zwischen der Wand des Trocknungsbehälters (15) und den Rollen (15/b) mit zylindrischer Form befindet, wobei
ein Senkrechtförderer (14) mit der Produkt-Zufuhr-Röhre (14/d) verbunden ist und die Ladebehälter-Auslass-Röhre des Senkrechtförderers (14) mit einer steuerbaren Ladeausrüstung (14/f) ausgestattet ist.

15. Vorrichtung nach Anspruch 12 oder 13, **dadurch gekennzeichnet, dass** die Vorrichtung (B), die Wärmeenergie nutzt, ein Trockenzylinder (17) mit stehender vertikaler Position ist, wobei sich am oberen Ende des Trockenzylinders (17) sowohl eine Produkt-Zufuhr-Röhre (14/d) als auch eine Luft-Auslass-Röhre (17/h) befinden, wobei sich an seinem unteren Ende sowohl eine Produkt-Auslass-Röhre (17/i) als auch, in angemessener Höhe über der Grundplatte und parallel zu ihr an einer Seite, ein Warmluft-Verteil-Röhrensystem (17/e) befinden, das mit einer Heißluft-Einlassröhre (18f) verbunden ist,
wobei sich an der Mittelachse des Trockenzylinders (17) eine Schwinge (17/c) befindet, an der übereinander rotierende Wirbler (17/a) von konischer Form und hergestellt aus siebartigem Mechanismus-Material befestigt sind, und wobei gegenüber von allen an der Innenwand des Trockenzylinders (17) Wirbler (17/b) mit Kornettform und hergestellt aus siebartigem Mechanismus-Material auf solche Art mit Stützbalken (17/j) befestigt sind, dass ein Abstand geformt wird, der den ungehinderten Durchfluss eines Produkts zwischen dem rotierenden kegelförmigen Wirbler (17/a) und dem kornettförmigen Wirbler (17/b) sicherstellt, und
wobei ein Senkrechtförderer (14) mit der Zufuhr-Röhre (14/d) verbunden ist.

## Revendications

1. Dispositif utilisant l'énergie solaire, spécialement pour le séchage, le grillage de produits alimentaires, finaliser la distillation et l'évaporation, séparer des composés complexes, comprenant :
des collecteurs (18/a) paraboloïdaux cylindriques, placés sur une plateforme en console, mobile, la face arrière du dispositif étant équipé d'un mécanisme de maintien et de déplacement des collecteurs (18/a), et
un appareil servant à conduire l'énergie thermique du collecteur, connecté aux collecteurs (18/a),
**caractérisé en ce que** les collecteurs (18/a) sont orientés parallèlement, sont déployés à la manière d'une plantation sur une plaque de maintien (18), et sont mobile dans la direction du soleil,
dans lequel, au foyer de chaque collecteur (18/a) est prévu un tube à fonction d'absorption (18/b), le tube à fonction d'absorption (18/b) étant de couleur noire ou grise sur sa surface extérieure, fermé ou avec des parois entièrement ou partiellement perforées, le tube à fonction d'absorption (18/b) étant fixé à ses deux extrémités, les tubes à fonction d'absorption (18/b) étant connectés à chaque autre sur un tube arqué (18/x) respectif, et avec une sortie directe,
un arbre à spirale (18/c) analogue à un tuyau, pour transporter le produit destiné au séchage, fourni dans chaque tube à fonction d'absorption (18/b), chaque arbre à spirale (18/c) analogue à un tuyau étant de nature massive ou caverneuse et susceptible de tourner, à l'aide d'un dispositif d'entraînement externe, produisant un déplacement orienté dans la direction du transport du produit, chaque arbre à spirale (18/c) analogue à un tuyau étant installé sur un châssis double (18/d) à l'aide d'un palier, dans lequel le long de l'axe de l'arbre à spirale (18/c) est formée une cavité analogue à un tuyau, dont la face avant est reliée à un tube d'entrée d'air chaud (18/f) et dont la sortie se trouve sur l'arbre à spirale (18/c) parmi des plaques à forme spirale,
dans lequel le produit de traitement est placé dans un récipient d'alimentation en produit (19), le récipient d'alimentation en produit (19) étant relié avec une pente, de préférence, à un tube de liaison (18/p) flexible, aux côtés de réception de produit du tube à fonction d'absorption (18/c), et
dans lequel l'extrémité du tube à fonction d'absorption (18/c) est connectée, via un tube de sortie, à un récipient de collecte (18/o).

2. Dispositif selon la revendication 1, **caractérisé en ce que** l'arbre à spirale (18/c) est réalisé en matériau massif, un tube d'entrée (18/t), muni d'une paroi perforée montant vers le haut pour guider de l'air dans le tube à fonction d'absorption d'air chaud (18/d), étant fixé au-dessous de l'arbre à spirale (18/c), la partie supérieure du tube d'entrée d'air (18/t) comprenant des trous aménagés en position verticale, devant coïncider avec des trous orientés vers le bas, ménagés sur la paroi verticale du tube à fonction d'absorption (18/b).

3. Dispositif selon la revendication 1, **caractérisé en ce que** l'arbre à spirale (18/c) est réalisé en matériau massif, un tube de drain de vapeur (18/cs) étant prévu au-dessus de l'arbre à spirale (18/c) et du tube à fonction d'absorption (18/b), le tube de drain de vapeur (18/cs) s'étendant parallèlement au tube à fonction d'absorption (18/c), de minces petits tubes verticaux reliant le tube de drain de vapeur (18/cs) à la paroi massive du tube à fonction d'absorption (18/b), et
une sortie du tube de drain de vapeur (18/cs) étant connectée à un récipient de collecte (18/o).

4. Dispositif selon l'une ou plusieurs des revendications 1 à 3, comprenant en outre une unité de commande, adaptée pour fixer le niveau de traitement ou le niveau de séchage du produit.

5. Dispositif utilisant l'énergie solaire spécialement pour sécher et griller des produits agricoles, ainsi que des produits de traitement alimentaires, comprenant :
un collecteur (C) fixé sur un châssis (K) et sur la face arrière du châssis (K);
un mécanisme, déplaçant le collecteur (C) de manière que ce collecteur (C) soit ajustable dans la direction du rayonnement solaire, le collecteur (C) comprenant des ouvertures pour le prélèvement d'énergie solaire;
un ou plusieurs mécanismes de déplacement et de support (L), de préférence au nombre de quatre, connectés à une extrémité au châssis (K) et déplaçant et ajustant le collecteur (C) en plusieurs directions, l'autre extrémité des mécanismes de support et de déplacement (L) étant connectée à une surface de base (A) fixe;
une plaque absorbante (5) de couleur noire, de préférence ayant une forme en pyramide ou en coin, placée sur une plaque isolante (1/c), la plaque isolante (1/c) étant placée sur une plaque de base du collecteur (C);
une plaque de couverture (1/b) translucide couvrant la totalité de la surface;
des déflecteurs (T), placés entre la plaque de base et la plaque de couverture (1/b) translucide, les déflecteurs (T) étant perpendiculaires à la plaque de base et parallèles à chaque autre, pour fournir un chemin d'écoulement d'air, les déflecteurs (T) étant les plus éloignés formant une paroi latérale;
une entrée (7) sur le chemin d'écoulement d'air, l'entrée (7) étant munie d'un filtre;
une sortie (7/a) à l'opposée de l'entrée (7), et
un carter de pompe à air (2), ayant une entrée connectée à la sortie (7/a) et une sortie à laquelle est connecté le dispositif (B) utilisant l'énergie thermique.

6. Dispositif selon la revendication 5, **caractérisé en ce que** le collecteur (C) est formé d'un collecteur (1) lisse hélicoïdal, et **en ce que** son chemin d'écoulement d'air est construit en un chemin de type en ruban.

7. Dispositif selon la revendication 5, **caractérisé en ce que** le collecteur (C) est formé d'un collecteur (4) lisse ayant une forme rectangulaire et son chemin d'écoulement d'air est construit en chemin de type en ruban et à forme arquée.

8. Dispositif selon la revendication 5, **caractérisé en ce que** le collecteur (C) est formé d'un collecteur (4/b) lisse à forme rectangulaire, dont l'entrée (7) est munie d'un filtre à air placé sur les parois de bordure perforées du collecteur (4/b) lisse et la sortie (7/a)de celui-ci étant placée à proximité du centre du collecteur (4b) lisse.

9. Dispositif selon la revendication 5, **caractérisé en ce que** le collecteur (C) sont formé d'un collecteur (1/A) lisse à forme circulaire, dont l'entrée (7) est munie d'un filtre à air placé sur les parois de bordure perforées des collecteurs (1/A) lisse et la sortie de celui-ci étant placée dans le centre du collecteur (1/A) lisse.

10. Dispositif selon l'une quelconque des revendications 5 à 9, **caractérisé en ce que** le châssis (K) lui-même maintient le collecteur (C) et est constitué par la plaque de base du collecteur (C).

11. Dispositif selon l'une quelconque des revendications 5 à 10, **caractérisé en ce que** chaque mécanisme de déplacement et de support (L) est formé d'un pied (10) télescopique ou d'une crémaillère (12g), déplacée à l'aide d'une roue dentée.

12. Dispositif selon l'une quelconque des revendications 5 à 11, **caractérisé en ce que**, entre la sortie (7/a) et le dispositif (B) utilisant l'énergie thermique, est prévu un tube de guidage d'air (13), muni d'une paroi isolante rigide et/ou un tube de guidage d'air (9) flexible étant connecté à l'entrée et à la sortie du carter de pompe à air (2).

13. Dispositif selon la revendication 12, **caractérisé en ce que**, entre le dispositif (B) utilisant l'énergie thermique et la sortie (7/a) du collecteur (C), en série dans le chemin d'air du carter de pompe à air (2), est prévu un récipient muni d'une paroi isolante, contenant un labyrinthe à air formé de briques réfractaires ou d'un serpentin coudé de façon hélicoïdale, pour créer le chemin d'air à l'intérieur du récipient faisant office d'accumulateur de chaleur, installé de manière périodique dans l'espace existant entre les parois du container et le serpentin rempli de poudre ou de substance granulaire et ayant une borne de sortie.

14. Dispositif selon la revendication 12 ou 13, **caractérisé en ce que** le dispositif (B) utilisant l'énergie thermique est un récipient de séchage (15) à section transversale rectangulaire, posé en position verticale, dans lequel, sur la face supérieure du récipient (15), sont prévus à la fois un tube d'alimentation en produit (14/d) et un tube de sortie d'air (15/f), dans lequel, sur la face inférieure du récipient (15) sont prévus à la fois un tube de vidage de produit (15g) et, à une hauteur appropriée au-dessus d'une plaque de fond et parallèlement à elle sur un côté, un système de tubes de distribution d'air de chauffage (15/d) connecté à un tube d'entrée d'air chaud (18f), et **en ce que**
à l'intérieur du récipient de séchage (15) est prévu : un convoyeur de séchage (15f) sans fin, construit de façon analogue à un cribleur et se déplaçant de façon inclinée vers le bas et tendu à l'aide de paliers montés avec des rouleaux (15/b) à forme cylindrique fixés sur des consoles; et un récipient de récupération de chute (15/c), fixé à la paroi du récipient de séchage (15) et placé entre la paroi du récipient de séchage (15) et les rouleaux (15/b) à forme cylindrique, dans lequel
un élévateur (14) est connecté au tube d'alimentation en produit (14/d) et le tube de sortie du récipient de chargement de l'élévateur (14) est muni d'un équipement de chargement (14/f) pouvant être commandé.

15. Dispositif selon la revendication 12 ou 13, **caractérisé en ce que** le dispositif (B) utilisant l'énergie thermique est un cylindre de séchage (17) à position d'installation verticale, dans lequel, sur l'extrémité supérieure du cylindre de séchage (17), sont prévus à la fois un tube d'alimentation en produit (14/d) et un tube de sortie d'air (17/h), dans lequel, sur son extrémité inférieure, sont prévus à la fois un tube de vidage de produit (17/i), et, à une hauteur appropriée au-dessus de la plaque de fond et parallèlement à elle sur un côté, un système de tubes_de distribution d'air de chauffage (17/e) connecté à un tube d'entrée d'air chaud (18f)
dans lequel, sur l'axe central du cylindre de séchage (17), est prévu un arbre rotatif (17/c), sur lequel, les uns au-dessus des autres, sont fixés des appareils centrifuges (17/a) à forme conique et formés d'un matériau produisant un mécanisme analogue à un cribleur, et, à l'opposé de la totalité de la paroi intérieure du cylindre de séchage (17), des dispositifs centrifuges (17/b), en forme de cornet et formés d'un matériau à mécanisme analogue à un cribleur, sont fixés à l'aide de barres support (17/j), de manière qu'une distance, assurant le passage sans restriction d'un produit entre l'élément centrifuge (17/a) rotatif à forme conique et l'élément centrifuge (17/b) à forme de cornet, soit formée, et
dans lequel un élévateur (14) est connecté au tube d'alimentation (14/d).
